Europäisches Patentamt

European Patent Office

Office européen des brevets

(19)

(11) **EP 0 785 530 A1**

(12) ## DEMANDE DE BREVET EUROPEEN

(43) Date de publication:
**23.07.1997 Bulletin 1997/30**

(51) Int Cl.$^6$: **G06T 5/00**

(21) Numéro de dépôt: **97400052.3**

(22) Date de dépôt: **13.01.1997**

(84) Etats contractants désignés:
**DE FI GB NL SE**

(30) Priorité: **16.01.1996 FR 9600424**

(71) Demandeur: **ALCATEL ALSTHOM COMPAGNIE GENERALE D'ELECTRICITE**
**75008 Paris (FR)**

(72) Inventeur: **Rezzouk, Jamal**
**91400 Orsay (FR)**

(74) Mandataire: **Fournier, Michel et al**
**c/o ALCATEL ALSTHOM,**
**Département de Propriété Industrielle,**
**30, avenue Kléber**
**75116 Paris (FR)**

(54) **Procédé d'extraction des deux bords d'une route par propagation de contour actif**

(57)    Selon ce procédé, on entre un premier (CS1) et un second (CS2) contour initial se situant respectivement à proximité de l'un et de l'autre bord de la route à extraire d'une image numérisée. On propage le premier contour initial à l'aide d'un premier processus automatique de propagation de contour actif (32) et le second contour initial à l'aide d'un second processus de propagation de contour actif (33). Chaque processus de propagation utilise, d'une part, un modèle d'énergie incluant un terme ($E_{coupl}$) relatif à des forces élastiques de couplage (F,T) entre des points appariés du premier et du second contour initial et, d'autre part, une direction de prolongation (Dp) définie comme étant une direction moyenne par rapport à deux directions de prolongation déterminées respectivement pour le premier et le second contour actif.

FIG. 3

## Description

L'invention concerne un procédé d'extraction du contour d'un objet à partir d'une image photographique numérisée, à l'aide d'un processus automatique de propagation de contour actif. L'invention porte plus particulièrement sur un procédé d'extraction des deux bords d'une route apparaissant dans une image photographique aérienne ou satellitaire à l'aide d'un tel processus.

Un procédé d'extraction des deux bords d'une route utilisant un processus automatique de propagation de contour actif est déjà connu de l'article "Model Driven Edge Detection - P. Fua et Y.G. Leclerc - Machine Vision and Applications, 3:45-56, 1990".

Selon ce procédé connu, un contour initial est entré dans l'image (affichée sur un écran) entre les deux bords de la route à extraire et ce contour initial est déformé et prolongé par un processus automatique de propagation de contour actif par recherche d'une position d'équilibre du contour actif, cette position d'équilibre correspondant à un minimum d'énergie aux points du contour actif dans un champ de forces de contrainte.

Dans le cas du procédé connu indiqué ci-dessus, le processus de propagation de contour actif intègre un paramètre de largeur associé au contour initial, ce paramètre permettant de définir le contour actif comme une sorte de ruban de largeur constante. Les deux bords du ruban définis par ce paramètre sont pris en compte pour la recherche du minimum d'énergie de la façon suivante. Le modèle mathématique d'énergie inclut, d'une part, un terme d'énergie interne (ou géométrique) défini comme la somme des énergies internes calculées respectivement aux points de l'un et l'autre bord du ruban et un terme d'énergie externe (ou photométrique) défini comme la somme des énergies externes calculées respectivement aux points de l'un et l'autre bord du ruban. Il est rappelé que l'énergie interne d'un contour actif est dérivée de forces de contraintes liées aux caractéristiques de rigidité et d'élasticité imposées au contour actif tandis que l'énergie externe d'un contour actif est dérivée de forces de contraintes liées aux caractéristiques photométriques de l'image. L'expression de ces termes d'énergie est donnée en détail dans l'article "Using Dynamic Programming for Minimizing the Energy of Active Contours in the Presence of Constraints - Amir A. Amini et al - IEEE Second Int. Conference on Computer Vision, p 95-99, 5 décembre 1988, Tampa (Floride)". En plus des deux termes d'énergie indiqués ci-dessus, le modèle d'énergie dans ce procédé connu, inclut un terme d'énergie relatif à des forces tendant à maintenir la largeur du ruban à une valeur constante lors de sa déformation. Un tel procédé est adapté à des situations où les deux bords à extraire, apparaissent dans l'image, espacés entre eux d'une distance quelconque mais constante.

On rencontre des situations, notamment du fait de l'augmentation de la résolution des appareils de prises de vue embarqués sur des satellites, où, dans l'image, les bords délimitant une route se confondent, avec le périmètre de zones d'ombre, de zones de stationnement, etc. Dans ce cas, la distance entre les deux bords apparaissant dans l'image, présente des variations importantes. L'application du procédé connu indiqué ci-dessus sur ce genre d'image requiert des interventions manuelles pour corriger les dérives du processus de propagation notamment aux endroits où les deux bords apparaissant dans l'image sont écartés entre eux d'une distance bien supérieure à la largeur du ruban.

Le but de l'invention est de proposer une solution à ce problème.

A cet effet, l'invention a pour objet un procédé pour extraire le contour d'un objet présentant deux bords latéraux, notamment une route, à partir d'une image photographique numérisée en utilisant un processus automatique de propagation de contour actif, caractérisé en ce qu'il comprend les étapes consistant à:

- entrer un premier et un second contour initial se situant respectivement à proximité de l'un et de l'autre bord latéral de l'objet dans l'image,
- propager le premier contour initial à l'aide d'un premier processus automatique de propagation de contour actif et le second contour initial à l'aide d'un second processus de propagation de contour actif, en utilisant pour chaque processus de propagation, d'une part, un modèle d'énergie incluant un terme relatif à des forces élastiques de couplage entre des points appariés du premier et du second contour initial et, d'autre part, une direction de prolongation commune définie comme étant une direction moyenne par rapport à deux directions de prolongation déterminées respectivement pour le premier et le second contour actif.

Dans un tel procédé, le processus de propagation pour l'extraction d'un bord de la route peut être contrôlé séparément du processus de propagation pour l'extraction de l'autre bord de la route, notamment par un réglage différent des paramètres des termes d'énergie interne utilisés par l'un et l'autre processus. On peut ainsi obtenir un comportement en déformation différent (en rigidité et élasticité) pour l'un et l'autre contour actif de façon à les adapter aux spécificités de l'un et l'autre bord de la route à extraire. Il est aussi possible de faire intervenir plus fortement l'un ou l'autre contour actif dans la détermination de la direction commune de prolongation. Finalement, on comprend que sur les deux contours actifs, l'un peut imposer ses déformations à l'autre à travers le terme d'énergie de couplage entre les deux contours actifs.

Le procédé selon l'invention est décrit ci-après en référence aux dessins.

La figure 1 montre un exemple d'image dans laquelle apparaissent deux bords d'une route à extraire.

La figure 2 illustre l'entrée des deux contours initiaux.

La figure 3 est un organigramme simplifié illustrant les différentes étapes de traitement du procédé selon l'invention.

La figure 4A donne l'expression des forces élastiques de couplage intervenant dans les deux processus de propagation de contour actif.

La figure 4B montre schématiquement l'orientation de ces forces élastiques de couplage en deux points appariés et la direction commune de prolongation des deux contours actifs.

Le procédé selon l'invention est adapté pour extraire le contour d'un objet ayant deux bords latéraux même quand ces deux bords présentent, dans l'image, des discontinuités de parallélisme, c'est-à-dire s'écartent plus ou moins l'un de l'autre.

Le procédé selon l'invention est plus particulièrement adapté à l'extraction des deux bords d'une route à partir d'une image aérienne ou satellitaire. L'invention pourrait trouver une application dans d'autres domaines, par exemple l'imagerie médicale.

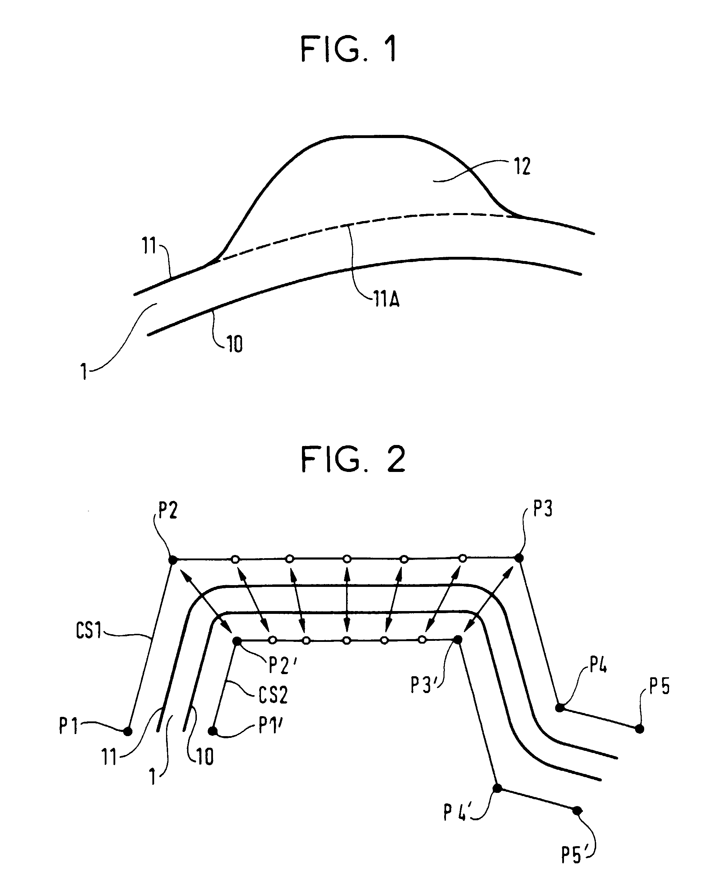

La figure 1 montre schématiquement un exemple d'image dans laquelle apparaissent deux bords 10 et 11 d'une route 1 qui s'écartent l'un de l'autre au niveau d'une zone 12 correspondant ici à une aire de stationnement.

Le procédé selon l'invention est adapté pour extraire le bord 11 de la route en l'isolant automatiquement en 11A de l'aire de stationnement.

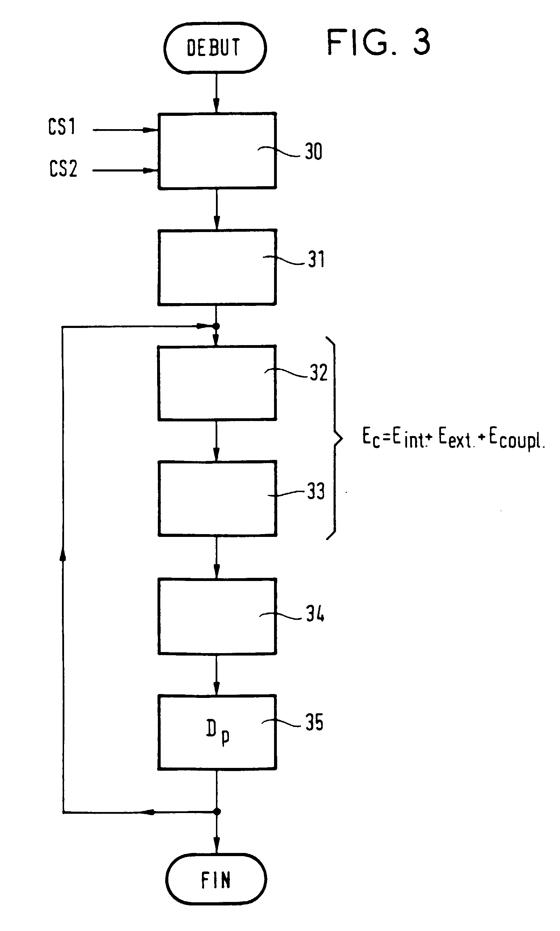

Les principales étapes de traitement du procédé selon l'invention sont montrées figure 3. Au départ, une image numérisée dans laquelle apparaît les bords d'une route à extraire, comme l'image de la figure 2, est affichée sur un écran d'une station de travail non représentée.

En 30 figure 3, un premier contour initial CS1 et un second contour initial CS2 sont entrés, par exemple à l'aide d'un organe de pointage sur écran, de telle façon à se situer à proximité respectivement du bord gauche 11 et du bord droit 10 de la route 1 montrée figure 2.

Ces deux contours initiaux CS1 et CS2 sont deux polylignes définies chacune par un ensemble de points d'image, P1 à P5 pour CS1 et P1' à P5' pour CS2.

En 31, les deux contours initiaux CS1 et CS2 sont discrétisés et les points de discrétisation des deux contours initiaux sont appariés. Le pas de discrétisation est un paramètre de réglage pour l'étape de traitement 31. Vu que les deux contours initiaux n'ont pas forcément une longueur identique, on procède de la façon suivante pour discrétiser chaque contour initial. On part de deux paires de points déjà appariés, par exemple les paires (P2,P2') et (P3,P3'). Le segment le plus long sur un contour initial est recherché. Dans l'exemple, il s'agit du segment P2-P3. Ce segment est discrétisé en utilisant le pas de discrétisation entré comme paramètre. Le nombre de points de discrétisation générés pour ce segment sert à calculer le pas de discrétisation pour le segment plus court P2'-P3' afin de générer un nombre identique de points de discrétisation pour ce segment. Les points de discrétisation sont ensuite appariés. La figure 2 montre un ensemble de points de discrétisation générés entre les sommets P2 et P3 du contour CS1 et un ensemble de points de discrétisation générés entre P2' et P3' du contour CS2. Les flèches sur la figure 2 montrent comment sont appariés les points de discrétisation et les points d'image entrés avec l'organe de pointage sur écran.

Ensuite, le premier contour initial CS1 est propagé à l'aide d'un premier processus automatique de propagation de contour actif et le second contour initial CS1 est propagé à l'aide d'un second processus de propagation automatique de contour actif pour obtenir des contours finaux qui correspondent aux bords à extraire de la route. A noter que ces deux processus de propagation sont des traitements itératifs, et par convention, le contour actif au stade d'une itération est appelé contour courant.

En 32, le premier contour initial (ou le premier contour courant) CS1 est déformé par une fonction de déformation du premier processus de propagation et en 33, le second contour initial (ou le second contour courant) est déformé par une fonction de déformation du second processus de propagation. Chaque fonction de déformation utilise un modèle d'énergie $E_c$ incluant, outre des termes classiques d'énergie interne $E_{int}$ et externe $E_{ext}$, un terme d'énergie $E_{coupl}$ relatif à des forces élastiques de couplage entre les points appariés des deux contours courants (au départ des deux contours initiaux).

A chaque itération, ou après un certain nombre d'itération (quand la distance entre deux points consécutifs de l'un ou l'autre des contours courants devient inférieure à un certain seuil), les deux contours courants sont discrétisés en 34 et les points de discrétisation des deux contours courants sont appariés comme indiqué pour l'étape 31.

En 35, les deux contours courants sont prolongés suivant une direction de prolongation commune définie comme la direction moyenne par rapport à deux directions de prolongation déterminées respectivement et classiquement pour l'un et l'autre contour courant.

Le traitement reprend, pour une nouvelle itération, à l'étape 32 jusqu'à ce que les contours courants dans les étapes 32 et 33 correspondent aux bords à extraire de la route.

Les forces élastiques de couplage en question incluent une force élastique linéaire désignée par F qui agit comme un ressort linéaire pour maintenir deux points appariés quelconque à une certaine distance et une force élastique de torsion désignée par T qui agit comme un ressort hélicoïdal pour éviter un glissement relatif entre ces deux points appariés. Finalement, le terme d'énergie relatif à ces forces de couplage agit pour une distance à peu près constante entre les deux contours courants en évitant un glissement relatif de l'un par rapport à l'autre.

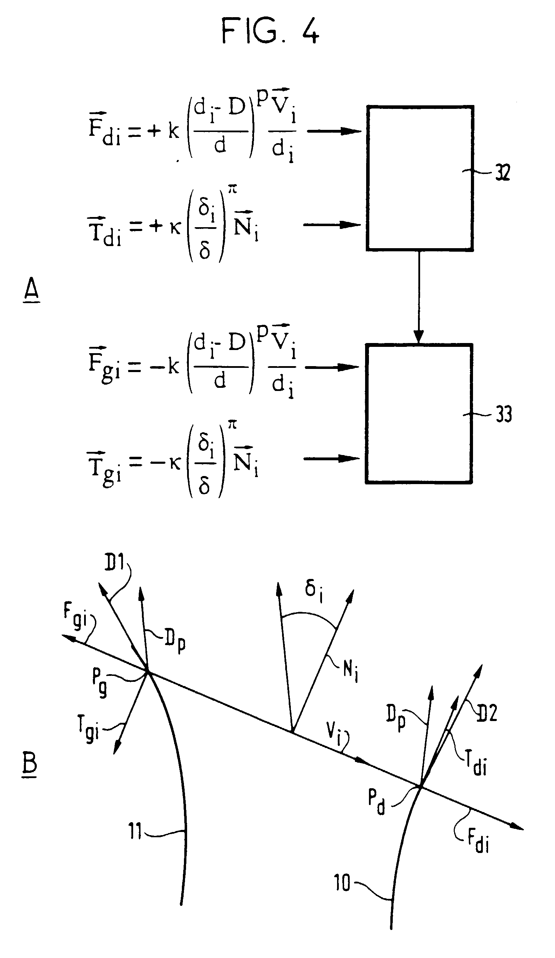

La figure 4A montre l'expression des forces élastiques F et T en deux points appariés des contours courants.

La force élastique linéaire F est orientée suivant une droite passant par ces points appariés indiqués figure 4B par Pg et Pd et s'exprime par la formule suivante:

$$\vec{F}_i = \pm\, k \left(\frac{d_i - D}{d}\right)^p \frac{\vec{V}_i}{d_i}$$

où

- vi est le vecteur défini par la ième paire de points de discrétisation appariés
- di est la norme du vecteur Vi
- D est la distance pour laquelle la force élastique linéaire s'annule,
- k est une constante multiplicative d'élasticité du ressort linéaire,
- p est une constante de puissance d'élasticité du ressort linéaire,
- d est une constante de régulation du ressort linéaire

La force élastique de torsion T est orientée suivant une direction perpendiculaire à la droite passant par les deux points de discrétisation appariés. Elle s'exprime par la formule suivante:

$$\vec{T}_i = \pm\, \kappa \left(\frac{\delta_i}{\delta}\right)^\pi \vec{N}_i$$

où

- Ni est le vecteur normalisé orthogonal (sens direct) à vi
- δi est l'angle entre Ni et la bissectrices tangentes respectives des deux contours courants au ième point de discrétisation,
- κ est une constante multiplicative de torsion,
- π est une constante de puissance du ressort hélicoïdale,
- δ est une constante d'angle de régulation du ressort hélicoïdale.

A noter que les forces élastiques linéaire Fdi et de torsion Tdi utilisées pour le modèle d'énergie du premier processus de propagation de contour actif 32 sont de signe opposé aux forces linéaire Fgi et de torsion Tgi utilisées pour le modèle d'énergie du second processus de propagation de contour actif 33.

La figure 4B montre la direction de prolongation commune Dp aux deux processus de propagation de contour actif 32 et 33. Cette direction Dp est la direction moyenne par rapport aux directions de prolongation D1 et D2 déterminées respectivement pour le contour courant (contour gauche) du premier processus de propagation 32 et le contour courant (contour droit) du second processus de propagation 33.

**Revendications**

1. Un procédé pour extraire le contour d'un objet (1) présentant deux bords latéraux (10,11), notamment une route, à partir d'une image photographique numérisée en utilisant un processus automatique de propagation de contour actif, <u>caractérisé</u> en ce qu'il comprend les étapes consistant à:

   - entrer (30) un premier (CS1) et un second (CS2) contour initial se situant respectivement à proximité de l'un et de l'autre bord latéral de l'objet dans l'image,
   - propager le premier contour initial à l'aide d'un premier processus automatique de propagation de contour actif (32) et le second contour initial à l'aide d'un second processus de propagation de contour actif (33), en utilisant pour chaque processus de propagation d'une part, un modèle d'énergie incluant un terme ($E_{coupl}$) relatif à des forces élastiques de couplage (F, T) entre des points appariés du premier et du second contour initial et, d'autre part, une direction de prolongation (Dp) du contour actif définie comme étant une direction moyenne par rapport à deux directions de prolongation (D1,D2) déterminées respectivement pour le premier et le second contour actif.

2. Le procédé selon la revendication 1, dans lequel les forces élastiques de couplage entre deux points appariés desdits contours initiaux incluent une force élastique linéaire (F) orientée suivant une droite passant par ces deux points appariés et une force élastique de torsion (T) orientée de façon perpendiculaire à cette droite.

# FIG. 1

# FIG. 2

FIG. 3

DEBUT

CS1 →

CS2 →

30

31

32

33

$E_c = E_{int} + E_{ext.} + E_{coupl.}$

34

$D_p$    35

FIN

6

# FIG. 4

$$\vec{F}_{di} = + k \left( \frac{d_i - D}{d} \right)^p \frac{\vec{V}_i}{d_i}$$

$$\vec{T}_{di} = + \kappa \left( \frac{\delta_i}{\delta} \right)^{\pi} \vec{N}_i$$

$\underline{A}$

$$\vec{F}_{gi} = - k \left( \frac{d_i - D}{d} \right)^p \frac{\vec{V}_i}{d_i}$$

$$\vec{T}_{gi} = - \kappa \left( \frac{\delta_i}{\delta} \right)^{\pi} \vec{N}_i$$

$\underline{B}$

Office européen
des brevets

**RAPPORT DE RECHERCHE EUROPEENNE**

Numero de la demande

EP 97 40 0052

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US 4 906 940 A (GREENE ROBERT R ET AL) 6 Mars 1990<br>* colonne 4, ligne 33 - ligne 39 *<br>* colonne 4, ligne 50 - ligne 62 *<br>* colonne 8, ligne 46 - ligne 52 *<br>* colonne 11, ligne 1 - colonne 13, ligne 30 *<br>* colonne 45, ligne 65 - colonne 46, ligne 51 *<br>* figures 5B,7,8 * | 1,2 | G06T5/00 |
| A | EP 0 626 655 A (MATSUSHITA ELECTRIC IND CO LTD) 30 Novembre 1994<br>* abrégé *<br>* colonne 6, ligne 32 - colonne 7, ligne 34 * | 1,2 | |
| A | MACHINE VISION AND APPLICATIONS, WINTER 1990, USA,<br>vol. 3, no. 1, ISSN 0932-8092,<br>pages 45-56, XP000602820<br>FUA P ET AL: "Model driven edge detection"<br>* page 51, alinéa 4.2.3 * | 1,2 | **DOMAINES TECHNIQUES RECHERCHES (Int.Cl.6)**<br><br>G06T |

Le présent rapport a été établi pour toutes les revendications

| Lieu de la recherche | Date d'achèvement de la recherche | Examinateur |
|---|---|---|
| LA HAYE | 26 Février 1997 | Gonzalez Ordonez, O |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P04C02)